Europäisches Patentamt

European Patent Office

Office européen des brevets

(19)

(11) Numéro de publication : **0 516 495 A1**

(12) # DEMANDE DE BREVET EUROPEEN

(21) Numéro de dépôt : **92401178.6**

(22) Date de dépôt : **24.04.92**

(51) Int. Cl.⁵ : **B60N 2/26**

(30) Priorité : 28.05.91 FR 9106375

(43) Date de publication de la demande :
02.12.92 Bulletin 92/49

(84) Etats contractants désignés :
DE ES GB IT SE

(71) Demandeur : REGIE NATIONALE DES USINES
RENAULT S.A.
34, Quai du Point du Jour
F-92109 Boulogne Billancourt Cédex (FR)

(72) Inventeur : Trosseille, Xavier
11, rue Croix Bosset
F-92310 Sèvres (FR)

(74) Mandataire : Ernst-Schonberg, Michel et al
REGIE NATIONALE DES USINES RENAULT
SA, Sce 0267, 860, quai de Stalingrad
F-92109 Boulogne Billancourt Cédex (FR)

(54) Dipositif de siège pour passager enfant intégré au composant d'un siège principal de véhicule automobile.

(57)   Dispositif de siège pour passager enfant, intégré au coussin (11) d'un siège principal (10) de
véhicule automobile, constitué par un élément
d'appui (14) formé par une partie dudit coussin
(11) amené en position érigée d'utilisation par
rotation autour d'un axe transversal, dans
lequel la surface d'appui (22) est orientée dans
le sens opposé au sens d'avancement du véhicule et se prolonge par une surface d'assise (25)
raccordée vers l'arrière à ladite surface d'appui
(22), caractérisé par le fait que l'élément d'appui
(14) formé dans le coussin (11) est porté par une
base (20), support dudit coussin (11) et possède
des modules (26 - 27), déployables dans le sens
d'un soutien des segments corporels du passager enfant.

FIG·3

EP 0 516 495 A1

L'invention concerne un dispositif de siège pour passager enfant, intégré au composant d'un siège principal de véhicule automobile adapté plus particulièrement aux enfants d'âge inférieur à 3 ans environ.

L'invention concerne plus particulièrement un dispositif de siège formé par un coussin et par un dossier qui peut être amené en position d'utilisation par rotation autour d'un axe transversal et qui est constitué par des éléments du siège principal qui sont intégrés en position de non utilisation audit siège principal pour former un élément de celui-ci.

La demande de brevet FR-A-90-09820 déposée au nom de la demanderesse décrit un dispositif de siège pour passager enfant, intégré au coussin d'un siège principal de véhicule automobile, constitué par un élément d'appui formé par une partie dudit coussin, amené en position érigée d'utilisation par rotation autour d'un axe transversal, dont la surface d'appui est orientée dans le sens opposé au sens d'avancement du véhicule et se prolonge par une surface d'assise raccordée vers l'arrière à ladite surface d'appui.

La publication EP-A-164909 décrit un siège de sécurité pour enfant, constitué par un baquet monté à coulissement sur des glissières courbes, le long desquelles il peut être immobilisé et orienté dans le sens opposé au sens d'avancement du véhicule.

L'invention a pour objet un siège de sécurité qui peut occuper soit une position de rangement dans le coussin du siège principal, soit une position de service à la suite d'un déplacement de coulissement le long de glissières courbes.

L'invention a encore pour objet un siège pour passager enfant susceptible d'occuper une position de rangement dans laquelle il est possible d'utiliser confortablement l'ensemble du coussin du siège principal et de conserver les fonctions initiales de la banquette arrière.

L'invention a aussi pour objet un dispositif de retenue intégré dans un composant du siège principal et susceptible d'occuper une position érigée verrouillée, indépendante de l'écartement longitudinal entre le bord avant dudit siège principal et la base du dossier d'un siège frontal.

Les recherches sur la sécurité des passagers enfants ont en effet montré que l'enfant est mieux protégé lorsqu'il est assis dans le sens opposé du sens d'avancement du véhicule. Sa tête et son dos prennent en effet appui contre le dossier du siège au cours des décélérations brutales du véhicule.

Partant de l'état de la technique précité, l'invention a pour objet un dispositif de siège constitué par au moins un élément d'appui du passager enfant, amené en position érigée d'utilisation à la suite d'une rotation d'un élément de l'assise du siège principal.

Selon l'invention, l'élément d'appui formé dans le coussin du siège principal est porté latéralement par une base, support dudit coussin et possède des modules de confort déployables dans le sens d'un soutien des segments corporels du passager enfant.

Selon une forme de réalisation du dispositif, l'élément d'appui est monté à coulissement sur des glissières latérales courbes et porte des moyens d'immobilisation et de positionnement par coopération mutuelle d'organes de verrouillage avec lesdites glissières.

Le dispositif de siège ainsi réalisé reçoit avantageusement des modules repliables constitutifs de l'appui-tête et d'un coussin d'assise.

D'autre caractéristiques et avantages du dispositif apparaîtront à la lecture de la description qui suit, faite en référence au dessin annexé dans lequel :

- la figure 1 est une représentation perspective du dispositif constitué par un élément de coussin de siège principal.
- les figures 2 et 3 sont des représentations schématiques du dispositif de siège respectivement en position de rangement et en position d'utilisation.
- Les figures 4 et 5 sont des représentations du dispositif de siège vu en plan en correspondance avec les positions de rangement et d'utilisation.
- la figure 6 est une section transversale des moyens de guidage selon la ligne 6-6 de la figure 2.

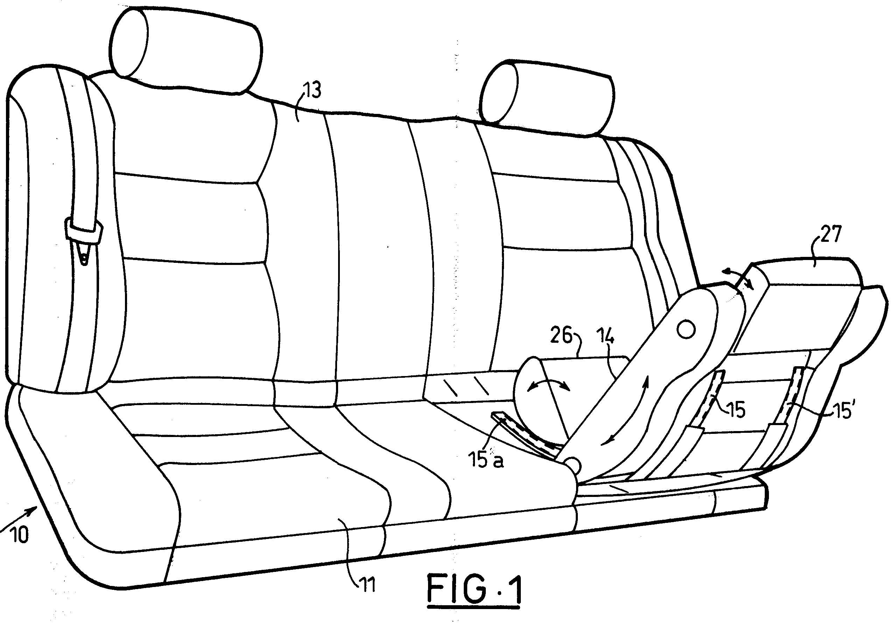

Selon la figure 1, le siège principal est constitué par une banquette arrière 10 de véhicule non représenté, constituée par un coussin 11 et par un dossier 13.

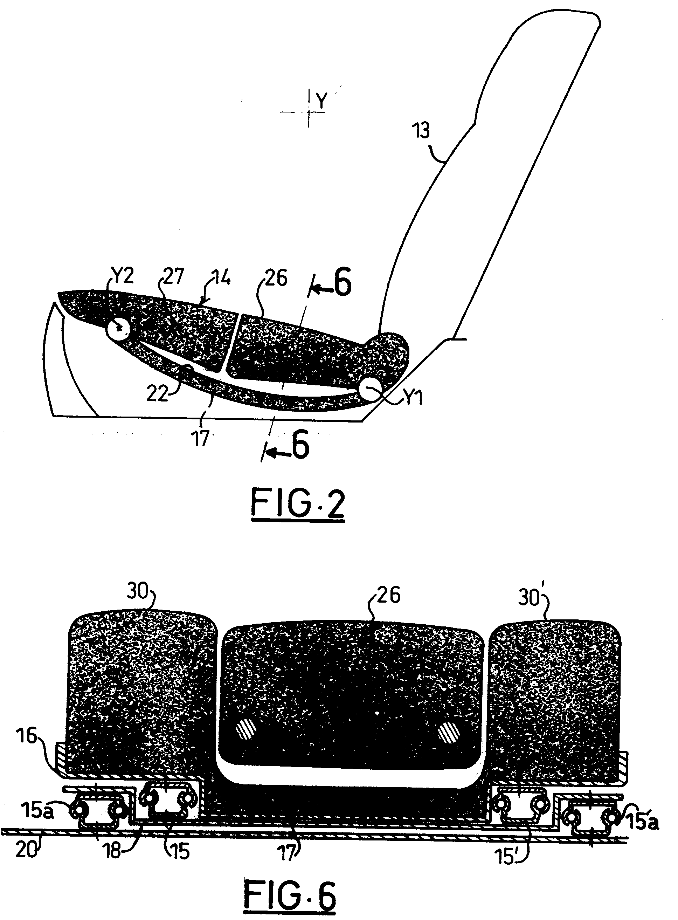

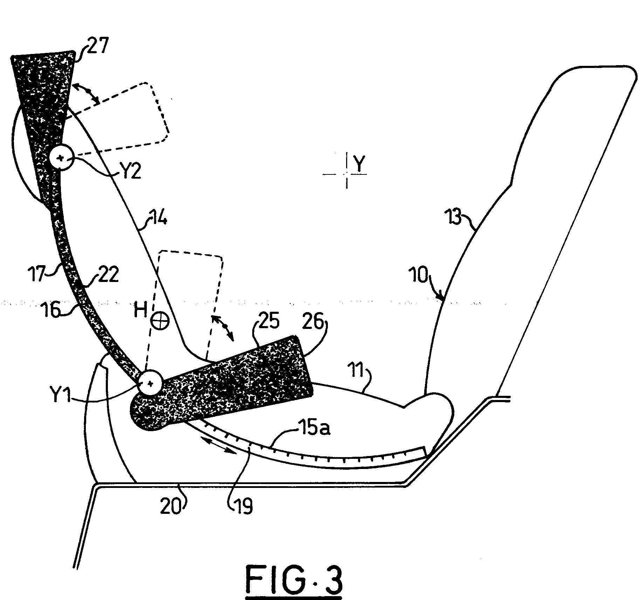

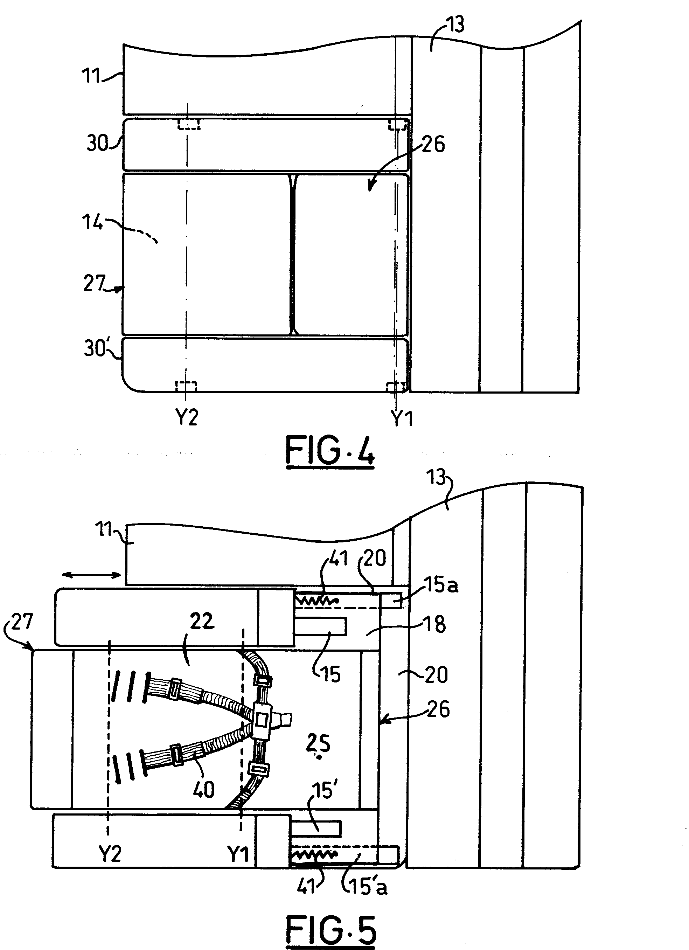

Dans cette réalisation, la partie latérale de la banquette 10 est occupée par un élément d'appui 14 encastré dans le coussin 11 qui peut occuper soit une position de rangement représentée à la figure 2 et 4, soit une position d'utilisation représentée à la figure 3 et 5. La position d'utilisation est déterminée par la course angulaire effectuée par l'élément d'appui 14 autour d'un axe transversal (Y).

Le réglage de l'élément d'appui 14 s'opère par l'intermédiaire de deux paires de glissières courbes 15, 15', 15a, 15'a connues en soi par exemple par la publication FR-A-2437954.

A cet effet l'élément d'appui 14 est constitué par une coquille 16 qui reçoit un capitonnage 17 et qui est fixée à la première paire des glissières courbes 15, 15'.

A titre d'exemple, les pièces de fixation de la coquille 16 aux glissières 15, 15' peuvent être constituées par des systèmes vis-écrou.

Les glissières 15, 15' sont centrées sur l'axe (Y) situé au dessus de l'axe théorique H de rotation existant entre la jambe et le torse du passager enfant et sont respectivement constituées par deux profilés emboîtés, parmi lesquels, le premier est solidaire de la coquille 16 et le deuxième est solidaire d'une tôle 18 prenant appui sur les profilés supérieurs de la deuxième paire des glissières courbes 15a et 15'a. Les profilés inférieurs de cette deuxième paire de glissières sont solidaires d'une tôle de plancher 20 constitutive de la base support du coussin 11 de la banquette 10.

Les glissières 15, 15′ 15a, 15′a, portent par ailleurs des dents ou encoches 19 de positionnement dont les flancs viennent en appui avec des verrous d'immobilisation ainsi que cela est bien connu.

Aux figures 3 et 5, la surface d'appui 22 du capitonnage 17 est orientée dans le sens opposé au sens d'avancement du véhicule et se prolonge par une surface d'assise 25 raccordée à la surface d'appui 22. A cet effet la surface d'assise est formée sur un premier module 26 monté à rotation autour d'un axe Y1 qui occupe une position de rangement dans laquelle la surface d'assise 25 est en contact avec la surface d'appui 22. et une position d'utilisation représentée aux figures 3 et 4 dans laquelle le passager enfant est assis.

D'une manière analogue un deuxième module 27 monté à rotation autour d'un axe Y2 occupe une position de rangement représentée aux figures 2 et 4 et une position déployée d'appui-tête représentée aux figures 3 et 5.

Selon une autre caractéristique du dispositif de siège, l'élément d'appui 14 est encastré entre deux éléments de maintien latéral 30, 30′ fixés à la coquille 16 et montés de part et d'autre de l'élément 14.

Le réglage en longueur des glissières 15, 15′, 15a, 15′a, permet l'obtention d'angles d'inclinaison de l'élément 14 compatibles avec une position assise ou couchée du passager.

Le réglage en inclinaison des modules 26, 27 permet la réalisation de zones de confort optimales.

Selon une autre caractéristique du dispositif, les verrous d'immobilisation des glissières sont associés à un moyen déclencheur asservi qui permet la libération des éléments mobiles des glissières 15, 15′, 15a, 15′a, dans le but d'obtenir un déplacement par inertie de l'élément 14. Un tel déplacement peut être souhaité en cas de décélération brutale de la charge représentée par le passager enfant retenu, sur le dispositif de siège par le harnais 40. Dans cette hypothèse un moyen dissipateur de l'énergie engendrée par l'inertie de l'élément d'appui et par sa charge constituée notamment par l'élément d'appui 14 et par la charge du passager enfant est avantageusement monté en tension entre la coquille 16 et la tôle de plancher 20. A titre d'exemple le moyen dissipateur d'énergie est constitué par un absorbeur textile 41 dont les extrémités sont ancrées sur la coquille 16 et la tôle de plancher 20.

## Revendications

**1°)** Dispositif de siège pour passager enfant, intégré au coussin (11) d'un siège principal (10) de véhicule automobile, constitué par un élément d'appui (14) formé par une partie dudit coussin (11) amené en position érigée d'utilisation par rotation autour d'un axe transversal, dans lequel la surface d'appui (22) est orientée dans le sens opposé au sens d'avancement du véhicule et se prolonge par une surface d'assise (25) raccordée vers l'arrière à ladite surface d'appui (22), caractérisé par le fait que l'élément d'appui (14) formé dans le coussin (11) est porté par une base (20), support dudit coussin (11) et possède des modules (26 - 27), déployables dans le sens d'un soutien des segments corporels du passager enfant.

**2°)** Dispositif de siège selon la revendication 1, caractérisé par le fait que l'élément d'appui (14) est monté à coulissement par l'intermédiaire des glissières latérales courbes (15, 15′, 15a, 15′a) et porte des moyens d'immobilisation et de positionnement (19) par coopération mutuelle d'organes de verrouillage avec lesdites glissières.

**3°)** Dispositif de siège selon la revendication 2, caractérisé par le fait qu'un jeu de glissières courbes (15a et 15′a) est porté par une base (20) support du coussin (11) du siège principal (10)

**4°)** Dispositif de siège selon l'une quelconque des revendications 1 à 4, caractérisé par le fait que l'organe de verrouillage de l'élément d'appui (14) porte des moyens de libération et d'amortissement de la masse d'inertie formée par l'ensemble de l'élément d'appui et par sa charge.

FIG.1

FIG·2

FIG·6

## FIG·3

FIG·4

FIG·5

Office européen
des brevets

# RAPPORT DE RECHERCHE EUROPEENNE

Numero de la demande

EP 92 40 1178

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 804 020 (TAKATA) <br> * le document en entier * <br> --- | 1,2 | B60N2/26 |
| A | DE-A-2 825 329 (OPEL) <br> --- | | |
| A | DE-A-3 922 836 (AMBROS) <br> --- | | |
| A | US-A-4 596 420 (VAIDYA) <br> --- | | |
| A | DE-A-4 022 438 (VOLKSWAGEN) <br><br> ----- | | |

DOMAINES TECHNIQUES RECHERCHES (Int. Cl.5)

B60N

Le présent rapport a été établi pour toutes les revendications

| Lieu de la recherche | Date d'achèvement de la recherche | Examinateur |
|---|---|---|
| LA HAYE | 23 JUILLET 1992 | HORVATH R. |